# EUROPEAN PATENT SPECIFICATION

(11) **EP 2 437 008 B1**
(45) Date of publication and mention of the grant of the patent: **04.07.2018**
(21) Application number: 10186438.7
(22) Date of filing: 04.10.2010
(51) Int. Cl.: F25B 5/04, F25B 49/02, F25D 17/06

(54) **Refrigeration appliance with two evaporators in series and method for controlling such appliance**
Kühlanwendung mit zwei in Serie geschalteten Verdampfern und Verfahren zur Steuerung einer solchen Vorrichtung
Appareil de réfrigération doté de deux évaporateurs en série et procédé de contrôle d'une telle application

(43) Date of publication of application: 04.04.2012
(73) Proprietor: WHIRLPOOL CORPORATION, Benton Harbor Michigan 49022 (US)
(72) Inventor: Bianchi, Lorenzo, 21025 Comerio (IT); Olivani, Andrea, 21025 Comerio (IT); Paviglianiti, Gaetano, 21025 Comerio (IT)
(74) Representative: Guerci, Alessandro

(56) References cited:
- EP-A2- 1 790 925
- WO-A1-00/71947
- DE-U1-202007 006 632
- US-B1- 6 286 326

## Description

The present invention relates to a refrigeration appliance including a refrigeration system comprising a first compartment including a first evaporator and a fan coupled to said first evaporator, a second compartment including a second evaporator connected in series and downstream said first evaporator, a compressor operationally coupled to said first evaporator and said second evaporator, and a control circuit for driving the compressor and the fan in order to switch on the compressor and the fan when there is a cooling demand in any of said compartments.

In the above kind of two compartments refrigeration appliances (fresh food and freezer) said compartments are cooled by two evaporators located inside the two cavities. In the most common layout the two evaporators are connected in series, with or without a by-pass branch which connects the refrigeration system upstream the first evaporator with the system downstream such evaporator. The refrigerant expansion occurs in the first evaporator first, while the second evaporator is downstream. Temperature control of such appliances is usually performed by means of three temperature sensors located on the fresh food evaporator (it controls fresh food evaporator defrost), inside the fresh food (it controls fresh food compartment temperature) and on freezer evaporator (it controls freezer compartment temperature). Document US-B-6 286 326 discloses a refrigeration appliance including a refrigeration system comprising a fresh food compartment having a fresh food evaporator and a fan coupled to said fresh food evaporator, a freezer compartment having a freezer evaporator connected in series and upstream the fresh food evaporator and a control circuit for driving the compressor and the fan in order to switch on the compressor and the fan when there is a cooling demand in any of said compartments. In the known solutions, when the compressor starts-up, the air circulating fan motor located inside the first compartment, for instance the fresh food compartment, starts as well. Having a forced air circulation inside the first compartment means increasing the heat exchange rate of first evaporator and reducing the temperature swing between different positions inside the first compartment. Therefore the fan improves the cooling efficiency and the food preservation inside first compartment. The drawback of the use of such a fan is related to the negative impact on the cooling efficiency of the second evaporator (downstream the first evaporator), during the transient period after compressor start-up. As a matter of fact, after compressor start-up, the first evaporator begins to cool down, but the high heat exchange rate due to the fan causes a rapid evaporation of the refrigerant. Warm gaseous refrigerant enters the second evaporator, causing a temporary temperature raise-up that has a negative impact on cooling efficiency.

It is an object of the present invention to provide a refrigeration appliance and a method for controlling such appliance which do not present the above mentioned drawbacks.

According to the invention, such object is reached thanks to the features listed in the appended claims.

The solution according to the present invention is used for refrigerators having the fresh food evaporator upstream the freezer evaporator, and its main feature is to delay the fan motor switch-on compared with the compressor start-up. The first evaporator has therefore a lower heat transfer rate (natural convection vs. forced-air convection) and cold liquid refrigerant enters the second evaporator earlier than with known present solutions. The main benefit of this solution is therefore to cool down more efficiently the second compartment, by avoiding the raise-up temperature that occurs at every compressor start-up. Moreover, fan delay means a lower energy consumption of the fan motor and a lower additional heat load into the first compartment due to the motor of the fan. The duration of the delay can be controlled in different ways. According to a first embodiment of the present invention, there can be a fixed time delay. According to a second embodiment, the delay ends when temperature difference between fresh food evaporator and freezer evaporator is smaller than a predetermined value. According to a third embodiment the delay ends when the temperature derivative of the freezer temperature curve is lower than a predetermined value, or comprised in a predetermined range of values, therefore indicating that evaporator temperature starts to be cool down.

Further features and advantages of a refrigeration appliance and to a method according to the present invention will be clear from the following detailed description, with reference to the attached drawings in which:

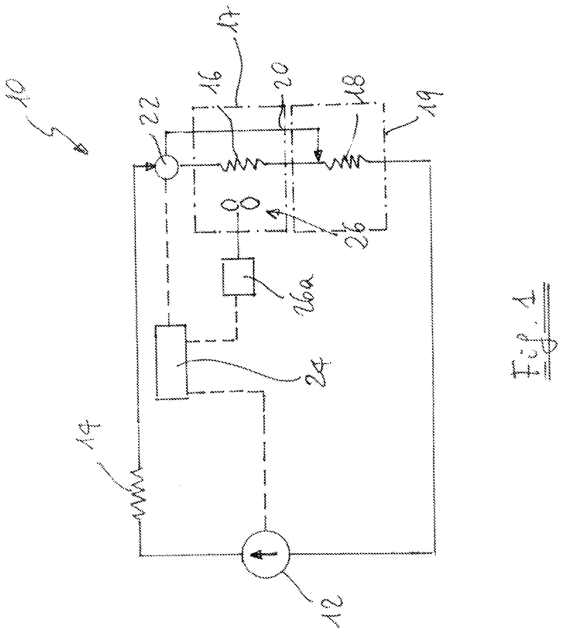

- figure 1 is a schematic view of the refrigeration system of an appliance according to the present invention;

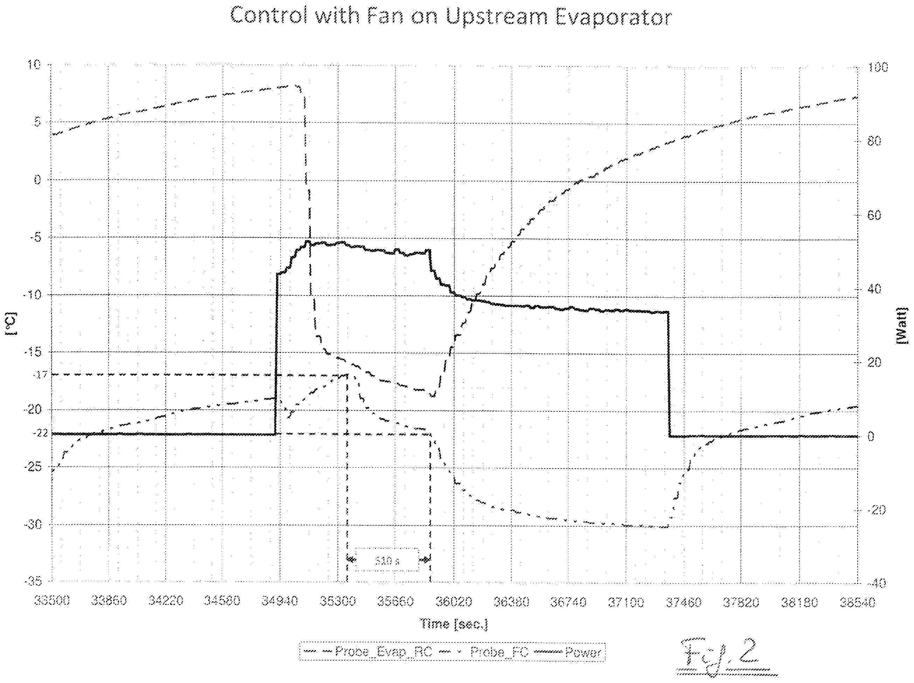

- figure 2 is a diagram showing the behavior of a refrigeration system according to the prior art, in which the fan is in "ON" configuration on upstream evaporator; and
- figure 3 is a diagram similar to figure 1 which refers to a refrigeration system of a refrigerator according to the invention, in which the fan is in "OFF" configuration on upstream evaporator.

With reference to the drawings, a refrigeration system 10 comprises a compressor 12, a condenser 14, a fresh food evaporator 16 and a freezer evaporator 18 connected in series. The fresh food evaporator 16 is in a fresh food compartment 17, while the freezer evaporator 18 is in a freezer compartment 19. According to an embodiment of the present invention, the system comprises a by-pass conduit 20 which by-passes the fresh food evaporator 16 and is controlled by a valve 22. According to another embodiment of the invention (not shown) such by-pass conduit is not present.

The refrigeration system 20 is driven through a control process unit 24 linked to the compressor 12, to the valve 22 and to the electric motor 26a of a fan 26 blowing air over the fresh food evaporator 16.

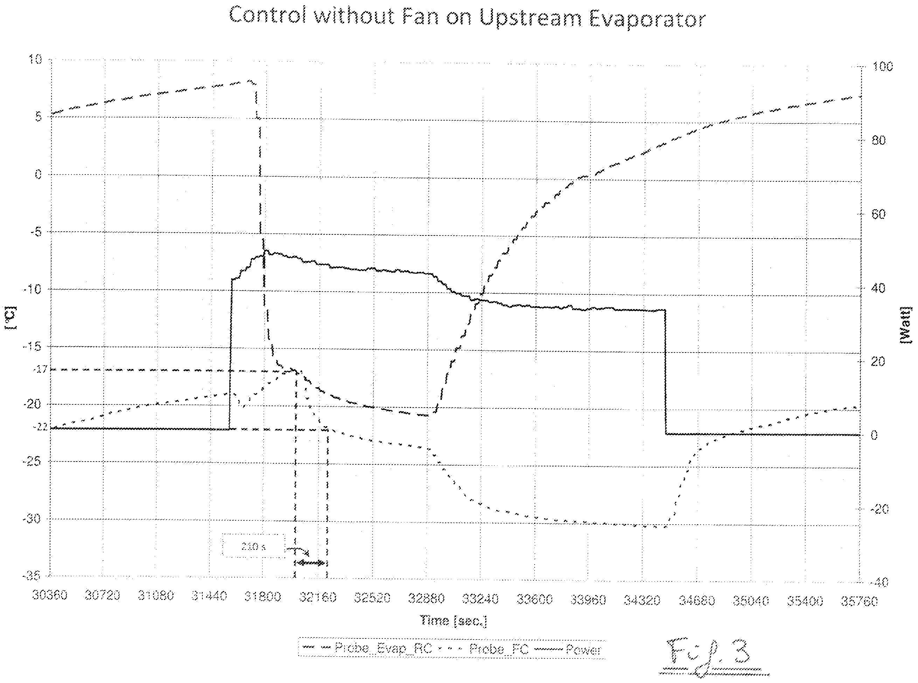

In the known solutions, the fan 26 is switched on with the compressor 12 whenever a refrigerant flow is requested in the first evaporator 16, which in the examples shown in the drawings is the fresh food evaporator. The result is shown in figure 3 in which there is shown a ON cycle of the compressor 12 in which the refrigerant is not by-passed, i.e. it flows first in the fresh food evaporator 16 and then in the freezer evaporator 18. In this cycle, the switching on of the fan 26 contributes to a quite high rise of temperature of the freezer evaporator 18, which takes about 510 sec before reaching a value below -22°C. In the solution according to the present invention (figure 3), where the switching on of the fan 26 is delayed, the temperature of the freezer evaporator 18 takes only 210 sec before reaching a value below -22°C, all the other parameter being identical (i.e. identical refrigerator with identical refrigeration system).

This means a higher energy efficiency of a refrigeration appliance according to the invention. Even if in the above example only one fan is shown in the first compartment, a second fan can be used in the second compartment as well.

## Claims

1. A refrigeration appliance including a refrigeration system (10) comprising:
- a **fresh food** compartment (17) having a **fresh food** evaporator (16) and a fan (26, 26a) coupled to said **fresh food** evaporator (16),
- a **freezer** compartment (19) having a **freezer** evaporator (18) connected in series and downstream the **fresh food** evaporator (16),
- a compressor (12) operationally coupled to said **fresh food** evaporator (16) and said **freezer** evaporator (18), and
- a control circuit (24) for driving the compressor (12) and the fan (26) in order to switch on the compressor and the fan when there is a cooling demand in any of said compartments, wherein the control circuit (24) is adapted to delay the switching-on of the fan (26, 26a) for a predetermined time after the compressor (12) is switched on.

2. A refrigeration appliance according to claim 1, wherein said predetermined delay time is a fixed time.

3. A refrigeration appliance according to claim 1, wherein said predetermined delay time is based on the time taken by the temperature difference between the **fresh food** evaporator (16) and the **freezer** evaporator (18) to be smaller than a predetermined value.

4. A refrigeration appliance according to claim 1, wherein said predetermined delay time is based on the time taken by the temperature derivative of the **freezer** evaporator (18) to become lower than a predetermined value.

5. A refrigeration appliance according to claim 1, wherein said predetermined delay time is based on the time taken by the temperature derivative of the **freezer** evaporator (18) to become comprised within a predetermined range of values.

6. A method for controlling a refrigeration appliance including a refrigeration system (10) comprising a **fresh food** compartment (17) including a **fresh food** evaporator (16) and a fan (26, 26a) coupled to said **fresh food** evaporator (16), a **freezer** compartment (19) including a **freezer** evaporator (18) connected in series and downstream the **fresh food** evaporator (16), a compressor (12) operationally coupled to said **fresh food** evaporator (16) and said **freezer** evaporator (18), and a control circuit (24) for driving the compressor (12) and the fan (26) in order to switch on the compressor (12) and the fan (26) when there is a cooling demand in any of said compartments, **characterized in that** it comprises the step of delaying the switching-on of the fan (26, 26a) for a predetermined time after the compressor (12) is switched on.

7. A method according to claim 6, wherein said predetermined delay time is a fixed time.

8. A method according to claim 6, wherein said predetermined delay time is based on the time taken by the temperature difference between the **fresh food** evaporator (16) and the **freezer** evaporator (18) to be smaller than a predetermined value.

9. A method according to claim 6, wherein said predetermined delay time is based on the time taken by the temperature derivative of the **freezer** evaporator (18) to become lower than a predetermined value.

10. A method according to claim 6, wherein said predetermined delay time is based on the time taken by the temperature derivative of the **freezer** evaporator (18) to become within a predetermined range of values.

## Patentansprüche

1. Kühlanwendung, die ein Kühlsystem (10) einschließt, umfassend:
- ein **Frischkost**fach (17) mit einem **Frischkost**verdampfer (16) und einem Gebläse (26, 26a), das mit dem **Frischkost**verdampfer (16) verbunden ist,
- ein **Gefrier**fach (19) mit einem **Gefrier**verdampfer (18), der in Reihe mit dem **Frischkost**verdampfer (16) und diesem nachgelagert verbunden ist,
- einen Kompressor (12), der betriebswirksam mit dem **Frischkost**verdampfer (16) und dem **Gefrier**verdampfer (18) verbunden ist, und
- eine Steuerschaltung (24) zum Antreiben des Kompressors (12) und des Gebläses (26), um den Kompressor und das Gebläse einzuschalten, wenn ein Kühlungsbedarf in einem der Fächer besteht, wobei die Steuerschaltung (24) dazu ausgelegt ist, das Einschalten des Gebläses (26, 26a) für einen vorgegebenen Zeitraum nach dem Einschalten des Kompressors (12) zu verzögern.

2. Kühlanwendung nach Anspruch 1, wobei es sich bei dem vorgegebenen Verzögerungszeitraum um einen festgelegten Zeitraum handelt.

3. Kühlanwendung nach Anspruch 1, wobei der vorgegebene Verzögerungszeitraum auf dem Zeitraum basiert, der benötigt wird, damit der Temperaturunterschied zwischen dem **Frischkost**verdampfer (16) und dem **Gefrier**verdampfer (18) kleiner wird als ein vorgegebener Wert.

4. Kühlanwendung nach Anspruch 1, wobei der vorgegebene Verzögerungszeitraum auf dem Zeitraum basiert, der benötigt wird, damit das Temperaturderivat des **Gefrier**verdampfers (18) niedriger wird als ein vorgegebener Wert.

5. Kühlanwendung nach Anspruch 1, wobei der vorgegebene Verzögerungszeitraum auf dem Zeitraum basiert, der benötigt wird, damit das Temperaturderivat des **Gefrier**verdampfers (18) in einem vorgegebenen Bereich von Werten enthalten ist.

6. Verfahren zum Steuern einer Kühlanwendung, die ein Kühlsystem (10) einschließt, umfassend ein **Frischkost**fach (17), das einen **Frischkost**verdampfer (16) und ein Gebläse (26, 26a) einschließt, das mit dem **Frischkost**verdampfer (16) verbunden ist, ein **Gefrier**fach (19), das einen **Gefrier**verdampfer (18) einschließt, der in Reihe mit dem **Frischkost**verdampfer (16) und diesem nachgelagert verbunden ist, einen Kompressor (12), der betriebswirksam mit dem **Frischkost**verdampfer (16) und dem **Gefrier**verdampfer (18) verbunden ist, und eine Steuerschaltung (24) zum Antreiben des Kompressors (12) und des Gebläses (26), um den Kompressor (12) und das Gebläse (26) einzuschalten, wenn ein Kühlbedarf in einem der Fächer besteht, **dadurch gekennzeichnet, dass** es den Schritt des Verzögerns des Einschaltens des Gebläses (26, 26a) für einen vorgegebenen Zeitraum nach dem Einschalten des Kompressors (12) umfasst.

7. Verfahren nach Anspruch 6, wobei es sich bei dem vorgegebenen Verzögerungszeitraum um einen festgelegten Zeitraum handelt.

8. Verfahren nach Anspruch 6, wobei der vorgegebene Verzögerungszeitraum auf dem Zeitraum basiert, der benötigt wird, damit der Temperaturunterschied zwischen dem **Frischkost**verdampfer (16) und dem **Gefrier**verdampfer (18) kleiner wird als ein vorgegebener Wert.

9. Verfahren nach Anspruch 6, wobei der vorgegebene Verzögerungszeitraum auf dem Zeitraum basiert, der benötigt wird, damit das Temperaturderivat des **Gefrier**verdampfers (18) niedriger wird als ein vorgegebener Wert.

10. Verfahren nach Anspruch 6, wobei der vorgegebene Verzögerungszeitraum auf dem Zeitraum basiert, der benötigt wird, damit das Temperaturderivat des **Gefrier**verdampfers (18) in einem vorgegebenen Bereich von Werten liegt.

## Revendications

1. Appareil de réfrigération comprenant un système de réfrigération (10) comprenant :
- un compartiment à **aliments frais** (17) ayant un évaporateur à **aliments frais** (16) et un ventilateur (26, 26a) couplé audit évaporateur à **aliments frais** (16),
- un compartiment de **congélateur** (19) ayant un évaporateur de **congélateur** (18) raccordé en série et en aval de l'évaporateur à **aliments frais** (16) ;
- un compresseur (12) couplé à service audit évaporateur à **aliments frais** (16) et audit évaporateur de **congélateur** (18) et
- un circuit de commande (24) pour entraîner le compresseur (12) et le ventilateur (26) afin de commuter sur le compresseur et le ventilateur lorsqu'il y a une demande de refroidissement dans l'un quelconque desdits compartiments, dans lequel le circuit de commande (24) est à même de retarder la commutation en service du ventilateur (26, 26a) pendant une période prédéterminée après que le compresseur (12) a été commuté en service.

2. Appareil de réfrigérant selon la revendication 1, dans lequel ladite période de retard prédéterminée est une période fixe.

3. Appareil de réfrigérant selon la revendication 1, dans lequel ladite période de retard prédéterminée est basée sur la période prise par la différence de température entre l'évaporateur à **aliments frais** (16) et l'évaporateur de **congélateur** (18) pour être plus basse qu'une valeur prédéterminée.

4. Appareil de réfrigérant selon la revendication 1, dans lequel ladite période de retard prédéterminée est basée sur la période prise par la dérivée de la température de l'évaporateur de **congélateur** (18) pour devenir plus basse qu'une valeur prédéterminée.

5. Appareil de réfrigérant selon la revendication 1, dans lequel ladite période de retard prédéterminée est basée sur la période prise par la dérivée de température de l'évaporateur de **congélateur** (18) pour se localiser dans une plage prédéterminée de valeurs.

6. Procédé pour commander un appareil de réfrigération comprenant un système de réfrigération (10) comportant un compartiment à **aliments frais** (17) comprenant un évaporateur à **aliments frais** (16) et un ventilateur (26, 26a) couplé audit évaporateur à **aliments frais** (16), un compartiment de **congélateur** (19) comprenant un évaporateur de **congélateur** (18) connecté en série et en aval de l'évaporateur à **aliments frais** (16), un compresseur (12) couplé en service audit évaporateur à **aliments frais** (16) et audit évaporateur de **congélateur** (18) et un circuit de commande (24) pour entraîner le compresseur (12) et le ventilateur (26) afin de commuter sur le compresseur (12) et le ventilateur (26) lorsqu'il y a une demande de refroidissement dans l'un quelconque desdits compartiments, **caractérisé en ce qu'**il comprend l'étape de retard de la commutation en service du ventilateur (26, 26a) pendant une période prédéterminée après que le compresseur (12) a été commuté en service.

7. Procédé selon la revendication 6, dans lequel ladite période de retard prédéterminée est une période fixe.

8. Procédé selon la revendication 6, dans lequel ladite période de retard prédéterminée est basée sur la période prise par la différence de température entre l'évaporateur à **aliments frais** (16) et l'évaporateur de **congélateur** (18) pour être plus basse qu'une valeur prédéterminée.

9. Procédé selon la revendication 6, dans lequel ladite période de retard prédéterminée est basée sur la période prise par la dérivée de la température de l'évaporateur de **congélateur** (18) pour devenir plus basse qu'une valeur prédéterminée.

10. Procédé selon la revendication 6, dans lequel ladite période de retard prédéterminée est basée sur la période prise par la dérivée de température de l'évaporateur de **congélateur** (18) pour se localiser dans une plage prédéterminée de valeurs.
